# EUROPEAN PATENT APPLICATION

(11) **EP 4 223 571 A1**
(43) Date of publication of application: **09.08.2023**
(21) Application number: 22206046.9
(22) Date of filing: 08.11.2022
(51) Int. Cl.: B60K 11/08

(54) **AIR INLET ARRANGEMENT FOR A VEHICLE**

(30) Priority: 22.12.2021 DE 102021134366
(71) Applicant: Valeo Klimasysteme GmbH, 96476 Bad Rodach (DE)
(72) Inventor: GRECHANYY, Vadim, 96476 Bad Rodach (DE); KUTTIG, Christian, 96476 Bad Rodach (DE); BOJDOW, Alexander, 96476 Bad Rodach (DE)
(74) Representative: Valeo Systèmes Thermiques

(57) **Abstract**

The invention relates to an air inlet arrangement (10) for a vehicle, having a frame-like carrier element (12) in which at least one first ventilation flap (22, 24) is arranged, the at least one first ventilation flap (22, 24) being rotatable about an axis of rotation (30) between a first, closed position and a second, opened position, the at least one first ventilation flap (22, 24) having a first terminal end portion (47, 49) and a second terminal end portion (38, 40) as viewed in the direction of the axis of rotation (30), the first end portion (47, 49) being at least indirectly rotatably mounted on the carrier element (12) and being fixed against an axial stop (46) as viewed in the direction of the axis of rotation (30), and the second terminal end portion (38, 40) being at least indirectly connected by means of a connecting element (52, 54) to an actuating drive (35) for rotating the at least one first ventilation flap (22, 24) about the axis of rotation (30).

## Description

### Technical field

The invention relates to an air inlet arrangement for a vehicle, which air inlet arrangement serves for controlling the air flow into the region of assemblies for cooling in an engine compartment and to brake systems and for battery cooling.

### Prior art

The applicant's WO 2020/165520 A1 has disclosed an air inlet arrangement for a vehicle having the features of the preamble of Claim 1. The known air inlet arrangement has a first ventilation flap, which is arranged rotatably between a closed position and an opened position and which is connected via a connecting element to an electric actuating drive. In the event of a breakage of the first ventilation flap, the first ventilation flap cannot be adjusted into the intended position. This furthermore has the consequence that the connecting element does not collide with a stop, which defines a maximum adjustment, on the connecting element, but rather rotates onwards. This onward rotation of the connecting element connected to the first ventilation flap is detected, such that a defect or breakage of the first ventilation flap can be inferred.

### Disclosure of the invention

The air inlet arrangement according to the invention for a vehicle having the features of claim 1 presents an alternative for detecting a breakage of the first ventilation flap, which alternative requires less outlay on equipment than the abovementioned prior art. It is the intention for such a defect of the first ventilation flap to be identified in particular in the course of on-board analysis (OBD) in order, for example, to avoid critical engine states or overheating assemblies, or in order to improve vehicle efficiency with regard to CO₂ emissions.

Against the background of the explanations above, it is therefore the case in an air inlet arrangement according to the invention for a vehicle, having the features of Claim 1, that the connecting element that connects the actuating drive to the first ventilation flap is composed of two components which form a helical toothing, the air inlet arrangement being configured to allow a separation of the two components in the absence of a reaction force that acts in the direction of the actuating drive during a rotation of the at least one first ventilation flap.

The invention is thus based on the concept of making it possible, in the event of a breakage of the first ventilation flap, for that portion of the first ventilation flap which is connected to the connecting element to be moved in a direction which is opposed to, or points away from, the actuating drive or the connecting element. Owing to the configuration of the two components of the connecting element as a helical toothing, this axial movement of the first ventilation flap in a direction that faces away from the actuating drive or from the connecting element has the effect that that component of the connecting element or of the helical toothing which is connected to the first ventilation flap moves away from the other component, which is connected to the actuating drive, of the connecting element or of the helical toothing. This in turn has the result that the actuating drive does not collide with a stop, which is formed between the first ventilation flap and the carrier element, for limiting the angle of rotation of the first ventilation flap; rather, that component of the connecting element which is connected to the actuating drive rotates onwards beyond a maximum intended angle of rotation, this being detected by the motor controller.

Advantageous refinements of the air inlet arrangement according to the invention for a vehicle are specified in the subclaims.

It is particularly preferable if, during the normal operation of the air inlet arrangement, the two components of the helical toothing are positioned relative to one another in a position in which one component is screwed into the other component to a maximum extent as viewed in a screwing-in direction. Such an arrangement of the two components of the helical toothing has the advantage that, when that component of the helical arrangement which is connected to the actuating drive rotates, the rotational movement is directly converted into a rotational movement of the other component, and thus into a rotational movement of the first ventilation flap.

In a further embodiment that is preferred from a design aspect, that component of the helical toothing which is assigned to the actuating drive is connected to a drive shaft of the actuating drive.

In order to make it possible for large air flows to be controlled by means of an inlet arrangement with a relatively compact or shallow construction of the air inlet arrangement, multiple second ventilation flaps are provided which are arranged parallel to one another and which are connected to the at least one first ventilation flap by means of a coupling mechanism such that the at least one first ventilation flap and the multiple second ventilation flaps are movable synchronously by the actuating drive.

In a preferred design embodiment of such a coupling mechanism, said coupling mechanism has a coupling rod that connects the first ventilation flap to the multiple second ventilation flaps.

In order, for a given or desired width of the air inlet arrangement, to limit the length of the at least one first ventilation flap in order to reduce bending forces that arise from the impingement of the relative wind, it is preferable that the carrier element in which the ventilation flaps are arranged or mounted has a central region in which the actuating drive is arranged, and that the actuating drive has, in the direction of two lateral opposite end regions of the carrier element, two drive shaft portions which are coupled to a respective first ventilation flap by means of a respective connecting element.

In order to reduce weight, and to make production as simple as possible, it is preferable for the first and second ventilation flaps to be composed of plastic.

In a further preferred embodiment of the air inlet arrangement, the at least one first (or second) ventilation flap is supported with respect to the relative wind by the carrier element between the two end portions thereof, preferably in the middle of the respective ventilation flap, at least when the ventilation flap is in a closed position. This support has the effect that the force on the carrier element in the flow direction of the air, which increases with increasing speed and which causes a deformation of the ventilation flap, is supported such that bending of the ventilation flap is reduced.

It is furthermore preferable that the actuating drive is coupled to a monitoring device for detecting the angle of rotation of the drive shaft, the monitoring device being at least indirectly configured to output a signal to a control device, and/or stop the rotation of the drive shaft, if a specified threshold value of the angle of rotation is overshot. In other words, this means that a breakage or defect of the first ventilation flap is detected by means of the monitoring device. This can result in either the actuating drive being deactivated, and/or preferably a corresponding fault entry additionally being stored for example in a fault memory of a control unit of the vehicle, which fault entry can be read out during a workshop visit. Furthermore, a visual display may also appear on an indicator instrument in the cockpit in order to notify the driver of the defect.

Finally, in a further preferred embodiment of the air inlet arrangement, that component of the connecting element which is coupled to the at least one first ventilation flap is formed monolithically with the at least one first ventilation flap. In this way, it is possible in particular for assembly effort to be reduced, because that component of the helical thread which is assigned to the first ventilation flap is produced monolithically with the first ventilation flap already during the production of the first ventilation flap.

Further advantages, features and details of the invention will become apparent from the following description of preferred embodiments of the invention and with reference to the drawings.

### Brief description of the drawings

- Figure 1: shows, in a front view, a ventilation arrangement for a vehicle,
- Figure 2: shows, in a partially sectional illustration, a part of the ventilation arrangement as per Figure 1 with ventilation flaps in an opened position,
- Figure 3: shows the constituent parts of a connecting element that connects an actuating drive of the air inlet arrangement to a first ventilation flap, in a state in which the components of the connecting element have been separated from one another, and
- Figure 4: shows, in a front view, a partial region of the ventilation arrangement in the event of a breakage of a first ventilation flap.

### Embodiments of the invention

Identical elements or elements having an identical function are denoted by the same reference numbers in the figures.

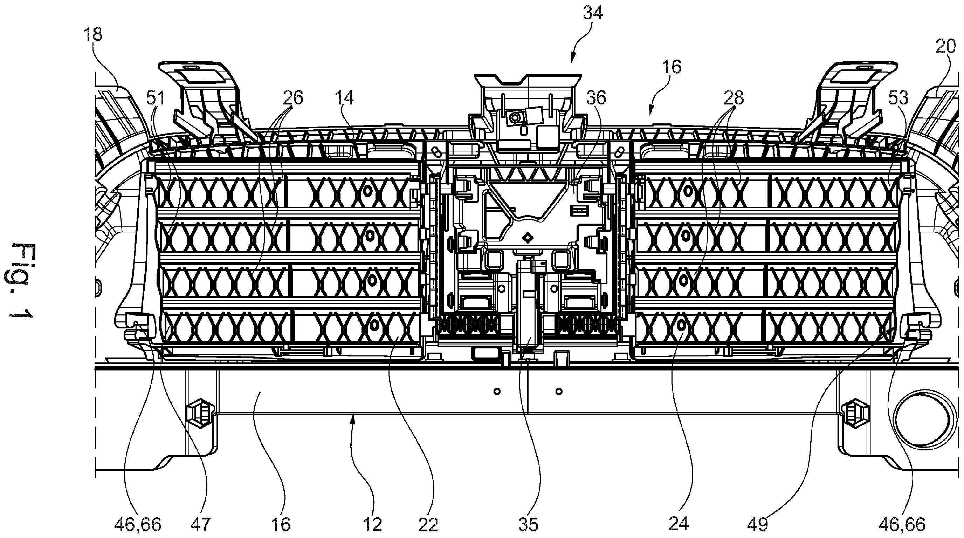

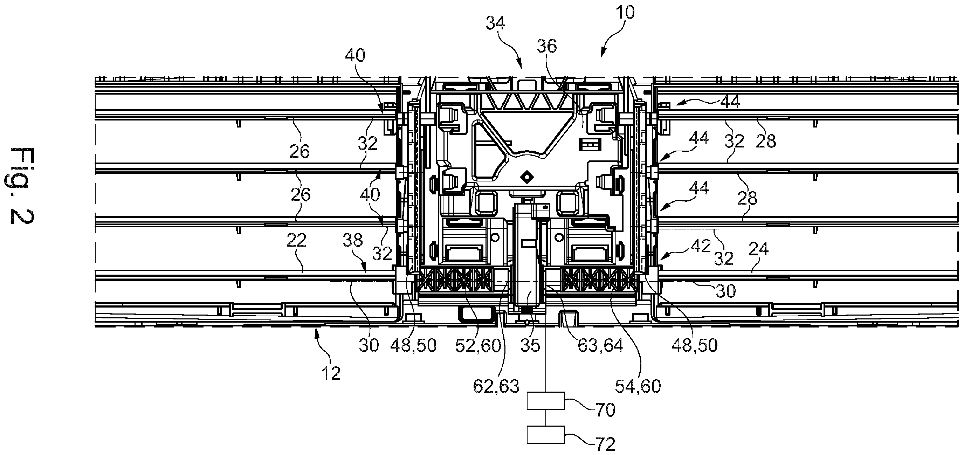

Figures 1 and 2 illustrate an air inlet arrangement 10 for a vehicle. The air inlet arrangement 10 is arranged in particular in the front region in the engine compartment of the vehicle, and serves for controlling the supply of air to assemblies for cooling in the vehicle.

The air inlet arrangement 10 has an approximately rectangular and frame-like carrier element 12 which, by way of example, comprises at least an upper transverse strut 14, a lower transverse strut 16, and end regions 18, 20 connected laterally to the transverse struts 14, 16. Within the carrier element 12, two first ventilation flaps 22, 24 are for example arranged, axially spaced apart from one another, in a lower region close to the lower transverse strut 16. By way of example, in each case three second ventilation flaps 26, 28 are provided parallel to the two first ventilation flaps 22, 24, the three second ventilation flaps 26 being assigned to the first ventilation flap 22, and the three second ventilation flaps 28 being assigned to the first ventilation flap 24. The single first ventilation flap 22, and the second ventilation flaps 26 assigned thereto, are in each case arranged parallel to one another. Likewise, the other first ventilation flap 24 is arranged parallel to the second ventilation flaps 28 that are assigned thereto. Furthermore, all ventilation flaps 22, 24, 26 and 28 are for example of at least approximately the same axial length.

The two first ventilation flaps 22, 24 have first axes of rotation 30 arranged in alignment with one another, and the second ventilation flaps 26, 28 have second axes of rotation 32 arranged in each case in alignment with one another. Furthermore, the second ventilation flaps 26, 28 are also arranged axially separately from one another. In particular, for this purpose, a central middle region 34 is provided in the carrier element 12, in which region an actuating drive 35 with an electric motor is also arranged. The actuating drive 35 is arranged in the middle region 34 on a holding element 36. On the side facing towards the actuating drive 35, the holding element 36 serves for the radial and axial mounting of the end portions 38, 40 of one first ventilation flap 22 and of the second ventilation flaps 26, and for the radial and axial mounting of the end portions 42, 44 of the other first ventilation flap 24 and of the second ventilation flaps 28 (Figure 2). Opposite this, those end portions 47, 49 of the two first ventilation flaps 22, 24 which are situated opposite the end portions 38, 40, and the corresponding end portions 51, 53 of the second ventilation flaps 26, 28, are mounted on the carrier element 12 in the end regions 18, 20 thereof (Figure 1).

The ventilation flaps 22, 24, 26 and 28, which are, in that particular example, each composed of plastic and which are produced for example in an injection moulding process, are arranged so as to be movable about their axes of rotation 30, 32 between a closed position, illustrated in Figure 1, and a position pivoted through 90° in relation to the closed position, corresponding to Figure 2. In the position of the ventilation flaps 22, 24, 26 and 28 as illustrated in Figure 1, the air passage through the ventilation arrangement 10 has been minimized. By contrast, in Figure 2, the air passage through the air inlet arrangement 10 has been maximized in order to allow good cooling of assemblies.

The first ventilation flaps 22, 24 are fixed against an axial stop 46, which is formed by the carrier element 12 in the end regions 18, 20, as viewed in the direction of the axes of rotation 30. Likewise, the second ventilation flaps 26, 28 are, in the end regions 18, 20, fixed against axial stops (not illustrated) on the carrier element 12.

The ventilation flaps 22, 24, 26 and 28 are moved by means of the actuating drive 35 by virtue of the actuating drive 35 being connected to the two first ventilation flaps 22, 24. Furthermore, the first ventilation flaps 22, 24 are connected, in each case via a coupling mechanism 48, to the second ventilation flaps 26, 28 that are assigned to said first ventilation flaps. For this purpose, the coupling mechanism 48 comprises in each case one coupling rod 50 at the first ventilation flaps 22, 24, which coupling rods are connected to the second ventilation flaps 26, 28 in order to allow a synchronous movement of the ventilation flaps 22, 24, 26 and 28.

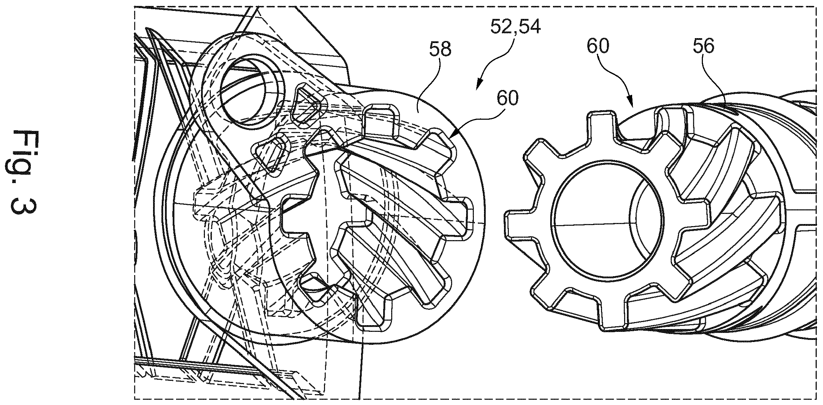

The rotational movement of the first ventilation flaps 22, 24 by means of the actuating drive 35 is implemented via a respective connecting element 52, 54, which connecting elements are of identical design. The connecting element 52, 54 is composed of two components 56, 58 (Figure 3), which in the joined state form a helical toothing 60. The connection of the respective connecting element 52, 54 to the actuating drive 35 is implemented by virtue of a respective drive shaft portion 62, 64 of a drive shaft 63 of the actuating drive 35 being connected rotationally conjointly to the first component 56. Furthermore, the second component 58 is preferably formed monolithically with the respective first ventilation flap 22, 24, that is to say is composed of plastic.

In the installed state of the connecting element 52, 54 as illustrated in Figures 1 and 2, the two components 56, 58 are arranged such that, correspondingly to the illustration of Figure 3, the first component 56, which has an external toothing, has been screwed to a maximum extent as viewed in an axial direction into a second component 58, which has a mating internal toothing. Furthermore, in order to limit the maximum pivot angle of the ventilation flaps 22, 24, 26 and 28, the ventilation flaps 22, 24 collide in each case with a rotational angle stop 66, merely symbolically illustrated in Figure 1, at the end regions 18, 20 of the carrier element 12.

The actuating drive 35 is furthermore coupled to a monitoring device 70, which is merely symbolically illustrated in Figure 2. The monitoring device 70 serves for detecting the rotational angle of the drive shaft portions 62, 64 of the actuating drive 35 and for example for monitoring the electrical current through the electric motor of the actuating drive 35. The latter serves in particular for the detection of the maximum pivot angle of the ventilation flaps 22, 24, when these come into contact with the rotational angle stop 66. In this case, the electrical current through the electric motor of the actuating drive 35 greatly increases, leading to the deactivation of the actuating drive 35. The rotational angle detected by the control device 70, and the electrical current through the electric motor of the actuating drive 35, are supplied as input variables to a control device 72. The control device 72 serves for controlling the rotational movement of the ventilation flaps 22, 24, 26 and 28. Furthermore, the control device 72 may for example be coupled to a control unit of the vehicle and/or to an indicator lamp in the cockpit of the vehicle. It is additionally pointed out that the monitoring device 70 and the control device 72 may self-evidently also be formed as a common structural unit.

Finally, the carrier element 12 of the air inlet arrangement 10 is configured such that, in the event of a breakage of a first ventilation flap 22, 24, the corresponding ventilation flap 22, 24 is, at the breakage point, not in operative connection or contact with the corresponding opposite side of the first ventilation flap 22, 24, and that part of the broken first ventilation flap 22, 24 which is connected to the second component 58 of the first ventilation flap 22, 24 can be moved axially in the direction of the end portions 18, 20 of the carrier element 12 until the two components 56, 58 of the connecting element 52, 54 cease to be in contact.

The function of the air inlet arrangement 10 is as follows: During normal operation, the position of the ventilation flaps 22, 24, 26 and 28 is set by means of the actuating drive 35 in accordance with the desired air throughput, by virtue of the drive shaft 66, 68 of the actuating drive 35 being rotated into a corresponding position. Here, the angular position of the drive shaft 66, 68 is detected by the monitoring device 70. Typically, the angle of rotation between the extreme positions, illustrated in the two Figures 1 and 2, of the ventilation flaps 22, 24, 26 and 28 is between 0° and 90°.

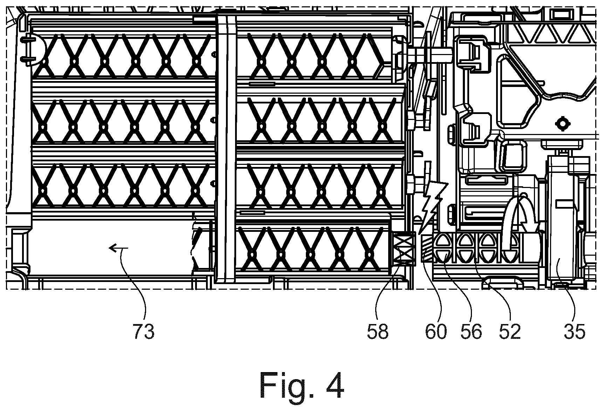

By contrast, if a breakage of a first ventilation flaps 22, 24 occurs correspondingly to Figure 4, then the actuating drive 35 rotates the drive shaft 66, 68 onwards, that is to say for example through a rotational angle range of greater than 90°, because those parts of the first ventilation flaps 22, 24 which are connected to the connecting element 52, 54 do not make contact with the rotational angle stop 66, and no reaction force in the direction of the actuating drive 35 is generated by the axial stop 46. The two components 56, 58 of the connecting element 52, 54 are thus separated in the direction of the arrow 73. Furthermore, the angle of rotation of the first component 56 of the connecting element 52, 54 is detected by the monitoring device 70 and is for example supplied as an input variable to the control device 72, which, if a maximum specified rotational angle of the first component 56 is overshot, deactivates the actuating drive 35 and preferably generates a corresponding signal in the fault memory of the control unit of the vehicle and optionally additionally activates a corresponding indicator lamp in the cockpit for the purposes of informing the driver.

The air inlet arrangement 10 thus described may be altered or modified in a wide variety of ways without departing from the concept of the invention. In particular, the ventilation flaps 22, 24, 26, 28 may be supported by the frame element 12 between the two end portions 38, 40, 42, 44, 47, 49, 51, 53 thereof, preferably in the middle of the ventilation flap 22, 24, 26, 28 as viewed in the direction of the axis of rotation 30, 32, in order to reduce the bending load in the case of high air throughputs.

### Reference designations

- 10: Air inlet arrangement
- 12: Carrier element
- 14: Upper transverse strut
- 16: Lower transverse strut
- 18: End region
- 20: End region
- 22: First ventilation flap
- 24: First ventilation flap
- 26: Second ventilation flap
- 28: Second ventilation flap
- 30: Axis of rotation
- 32: Axis of rotation
- 34: Middle region
- 35: Actuating drive
- 36: Holding element
- 38: End portion
- 40: End portion
- 42: End portion
- 44: End portion
- 46: Axial stop
- 47: End portion
- 48: Coupling mechanism
- 49: End portion
- 50: Coupling rod
- 51: End portion
- 52: Connecting element
- 53: End portion
- 54: Connecting element
- 56: First component
- 58: Second component
- 60: Helical toothing
- 62: Drive shaft portion
- 63: Drive shaft
- 64: Drive shaft portion
- 66: Rotational angle stop
- 70: Monitoring device
- 72: Control device
- 73: Arrow

## Claims

1. Air inlet arrangement (10) for a vehicle, having a frame-like carrier element (12) in which at least one first ventilation flap (22, 24) is arranged, the at least one first ventilation flap (22, 24) being rotatable about an axis of rotation (30) between a first, closed position and a second, opened position, the at least one first ventilation flap (22, 24) having a first terminal end portion (47, 49) and a second terminal end portion (38, 40) as viewed in the direction of the axis of rotation (30), the first end portion (47, 49) being at least indirectly rotatably mounted on the carrier element (12) and being fixed against an axial stop (46) as viewed in the direction of the axis of rotation (30), and the second terminal end portion (38, 40) being at least indirectly connected by means of a connecting element (52, 54) to an actuating drive (35) for rotating the at least one first ventilation flap (22, 24) about the axis of rotation (30),
**characterized**
**in that** the connecting element (52, 54) is composed of two components (56, 58) which form a helical toothing (60), the air inlet arrangement (10) being configured to allow a separation of the two components (56, 58) in the absence of a reaction force that acts in the direction of the actuating drive (35) during a rotation of the at least one first ventilation flap (22, 24).

2. Air inlet arrangement according to Claim 1,
**characterized**
**in that**, during normal operation of the air inlet arrangement (10), the two components (56, 58) are positioned relative to one another in a position in which one component (56) is screwed into the other component (58) to a maximum extent as viewed in a screwing-in direction.

3. Air inlet arrangement according to Claim 1 or 2,
**characterized**
**in that** that component (56) of the helical toothing (60) which is assigned to the actuating drive (35) is connected to a drive shaft (63) of the actuating drive (35).

4. Air inlet arrangement according to any one of Claims 1 to 3,
**characterized**
**in that** multiple second ventilation flaps (26, 28) are provided which are arranged parallel to one another and which are connected to the at least one first ventilation flap (22, 24) by means of a coupling mechanism (48) such that the at least one first ventilation flap (22, 24) and the multiple second ventilation flaps (26, 28) are movable synchronously means of the actuating drive (35).

5. Air inlet arrangement according to Claim 4,
**characterized**
**in that** the coupling mechanism (48) has a coupling rod (50).

6. Air inlet arrangement according to any one of Claims 1 to 5,
**characterized**
**in that** the carrier element (12) has a central region (34) in which the actuating drive (35) is arranged, and in that the actuating drive (35) has, in the direction of two lateral end regions (18, 20) of the carrier element (12), two drive shaft portions (62, 64) which are coupled to a respective first ventilation flap (22, 24) by means of a respective connecting element (52, 54).

7. Air inlet arrangement according to any one of Claims 1 to 6,
**characterized**
**in that** the ventilation flap (22, 24, 26, 28) is composed of plastic.

8. Air inlet arrangement according to any one of Claims 1 to 7,
**characterized**
**in that** the at least one ventilation flap (22, 24, 26, 28) is supported by the carrier element (12) between the two end portions (38, 40, 42, 44, 47, 49, 51, 53) thereof, preferably in the middle of the ventilation flap (22, 24, 26, 28) as viewed in the direction of the axis of rotation (30, 32).

9. Air inlet arrangement according to any one of Claims 1 to 8,
**characterized**
**in that** the actuating drive (35) is coupled to a monitoring device (70) for detecting the angle of rotation of the drive shaft (63), the monitoring device (70) being at least indirectly configured to output a signal to a control device (72), and/or stop the rotation of the drive shaft (63), if a specified threshold value of the angle of rotation is overshot.

10. Air inlet arrangement according to any one of Claims 1 to 9,
**characterized**
**in that** that component (58) of the connecting element (52, 54) which is coupled to the at least one first ventilation flap (22, 24) is formed monolithically with the at least one first ventilation flap (22, 24).
